Europäisches Patentamt

European Patent Office

Office européen des brevets

(11) Veröffentlichungsnummer: **0 088 807**
**A1**

(12) # EUROPÄISCHE PATENTANMELDUNG

(21) Anmeldenummer: 82101763.9

(22) Anmeldetag: 06.03.82

(51) Int. Cl.³: **B 23 F 1/06**
**B 23 C 3/30**

(43) Veröffentlichungstag der Anmeldung:
21.09.83 Patentblatt 83/38

(84) Benannte Vertragsstaaten:
CH DE FR GB IT LI SE

(71) Anmelder: IMS Morat Söhne GmbH Zahnradtechnik
Hauptstrasse 52
D-7821 Eisenbach 1(DE)

(72) Erfinder: Willmann, Norbert
Wiesbachweg 15
D-7821 Eisenbach 1(DE)

(72) Erfinder: Schwörer, Ulrich
Bubenbacherstrasse 12
D-7821 Eisenbach 2(DE)

(74) Vertreter: Thoma, Friedrich Xaver, Dipl.-Ing.
Leimengrubweg 12
D-7612 Haslach i.K.(DE)

(54) Verzahnungswerkzeug zum Fräsen von Zahnrädern und anderen Werkstücken.

(57) Bei diesem Verzahnungsswerkzeug mit einem Werkzeughalter (1) und einem darauf angeordneten Fräswerkzeug zum Fräsen von Zahnrädern (10) oder anderen Werkstücken ist sowohl aus fertigungstechnisch rationellen, als auch aus wirtschaftlichen Gründen das Fräswerkzeug als Formschnittplatte (7) ausgebildet. Diese Formschnittplatten (7) können einzeln oder zu mehreren insbesondere lösbar kraftschlüssig und insbesondere als Einwegplatte für einen einmaligen Gebrauch auf einem Werkzeughalter (1) angeordnet sein. Die Span- und Freiwinkel der auf einem Werkzeughalter (1) angeordneten Formschnittplatten (7) sind durch die jeweilige Auslegung der Plattensitze (12) symetrisch zur Vorschubachse (19) angeordnet. Dabei können die Formschnittplatten (7) je nach Auslegung des Plattensitzes mit positivem (20) oder negativem Spanwinkel arbeiten. Die Werkzeughalter können entweder mit festen oder mit einstellbaren Plattensitzen ausgelegt werden. Das Verzahnungswerkzeug ermöglicht zusätzlich bei entsprechender konstruktiver Gestaltung des Werkzeughalters (1) und der Formschnittplatten (7) ein Vor- und Fertigfräsen des Werkstückes (10), ein in mehrere Schnitte aufgeteiltes Fräsen des Zahnprofiles (8 und 9) eines Werkstückes (10) sowie mehrgängiges Fräsen auch in Verbindung mit den zuvor genannten Bearbeitungsvariationen.

Fig. 5

EP 0 088 807 A1

./...

Fig.6

**0088807**

## Verzahnungswerkzeug zum Fräsen von Zahnrädern und anderen Werkstücken

Die Erfindung betrifft ein Verzahnungswerkzeug, bestehend aus einem Werkzeughalter und einem darauf auswechselbar angeordneten Schneidenteil, zum Fräsen von Zahnrädern und anderen Werkstücken.

Die bekannten Verzahnungswerkzeuge zum Fräsen von Zahnrädern, sogenannte Schlagzahn-Wälzfräser, sind koaxial zum Schnittrichtungsverlauf mit einer Lagerbohrung versehen, zur Anordnung und axialkraftschlüssigen Befestigung auf einem Werkzeugaufnahmedorn oder einer Werkzeugspindel einer Zahnradfräsmaschine.

Derartig aufgebaute, gelagerte und befestigte Verzahnungswerkzeuge ermöglichen ausschließlich ein werkzeugspezifisches Formschnittfräsen. Bei dieser Art des Formschnittfräsens ist das Zahnprofil des Werkstückes, geneigt um den Steigungswinkel, auf dem Schlagzahn-Wälzfräser aufgebracht. Der Freiwinkel entsteht durch das logarithmische Hinterschleifen des Profiles. Um eine Profilverzerrung zu vermeiden, wird der Spanwinkel $0°$ gewählt. Die Spannutensteigung wird achsparallel angeführt. Dadurch entstehen, bedingt durch den Steigungswinkel, an der rechten Werkzeugschneide andere Schnittverhältnisse als an der linken Werkzeugschneide.

Der Erfindung liegt die Aufgabe zugrunde, ein Verzahnungswerkzeug der eingangs genannten Art zu schaffen, das durch jeweilige Anpassung an Werkstoff und Werkstück die Schnittbedingungen an den Werkzeugschneiden erheblich verbessert und das Auswechseln des Schneidenteiles in kürzester Zeit ermöglicht, so daß ein wirtschaftliches Fräsen ermöglicht wird und eine technisch einfache Herstellung des auswechselbaren Schneidenteiles gegeben ist. Dieses Fräswerkzeug kann in vielfältiger Weise variiert und so dem jeweiligen Bearbeitungsproblem individuell angepaßt werden.

Diese Aufgabe wird erfindungsgemäß dadurch gelöst, daß der Schneidenteil als Formschnittplatte ausgebildet ist, die insbesondere lösbar kraftschlüssig auf einem Werkzeughalter angeordnet ist. Eine derartige Formschnittplatte, die vielfach im technischen Sprachgebrauch auch als Wendeplatte bezeichnet wird, ist beliebig wechselbar und kann eine oder mehrere Formschneiden aufweisen. Eine derartige Formschnittplatte ist im weitesten Sinne eine sogenannte Einwegplatte, die nach Abnützung der Schneiden gewendet oder gegen eine neue, entsprechende Formschnittplatte auf dem Werkzeughalter gewechselt oder ausgetauscht werden kann. Sie kann jedoch in bestimmten Fällen auch nachgearbeitet oder nachgeschliffen werden.

Für einen großen Teil von Fräsarbeiten mit einem derartigen Verzahnungswerkzeug ist eine einzelne Formschnittplatte mit dem erforderlichen Zahnprofil ausreichend. In Weiterbildung der Erfindung können je nach Bearbeitungsaufgabe und Zweckmäßigkeit mehr als eine Formschnittplatte auf dem Werkzeughalter angeordnet sein, der dann mit entsprechenden Plattensitzen und Befestigungseinrichtungen für die jeweilige Anzahl von Formschnittplatten ausgestattet ist.

So sind Formschnittplatten, insbesondere zum Vor- und Fertigschneiden eines Profils, oder entsprechende Formschnittplatten für eine Schnittaufteilung eines zu fräsenden Profils vorgesehen und auf einem Werkzeughalter entsprechend angeordnet und ausgerichtet. Die Formschnittplatten für eine derartige Einrichtung sind insbesondere aus Hartmetall hergestellt und insbesondere mittels einer Klemmbefestigung auf einem Werkzeughalter befestigt. Der Werkzeughalter ist zweckmäßigerweise mit einer einseitigen oder mit einer beidseitigen Lagerung versehen.

Vorteilhaft bei einem derartigen Verzahnungswerkzeug ist nicht nur die einfache, rationelle und wirtschaftliche Herstellung der jeweiligen Formschnittplatten, sondern auch deren vielfältige Variationsmöglichkeit und Anpassungsfähigkeit an den zu bearbeitenden Werkstoff und die werkstückbezogenen Bedingungen und der damit erzielbaren günstigen Schnittwerte.

Ausführungsbeispiele, aus denen die Erfingung hervorgeht, und deren Einsatz- und Schnittmöglichkeiten im wesentlichen dargestellt sind, werden anhand der Zeichnungen im folgenden näher erläutert. Es zeigt

Fig. 1 eine Vorderansicht auf ein, auf einer nur zum Teil dargestellten Zahnradfräsmaschine angeordneten, Verzahnungswerkzeug mit einem Werkzeughalter und dort aufgespannter Formschnittplatte,

Fig. 2 eine um 90° versetzt gezeichnete Ansicht auf das Verzahnungswerkzeug nach Fig. 1,

Fig. 3 eine Querschnittsansicht durch das Verzahnungswerkzeug nach Fig. 1 und 2 mit einer Klemmschraubenbefestigung der Formschnittplatte (Prinzipdarstellung),

Fig. 4 eine Querschnittsansicht durch das Verzahnungswerkzeug nach Fig. 1 und 2 mit einer Klemmbackenbefestigung der Formschnittplatte (Prinzipdarstellung),

Fig. 5 eine schaubildliche Ansicht eines Verzahnungswerkzeuges in der üblichen Einstellage beim Verzahnen eines Zahnrades, jedoch mit einem um den Einstellbzw. Steigungswinkel aus der Werkzeugachse geschwenkt angeordneten Plattensitz. Auf diese Weise werden gleiche Schnittverhältnisse an der rechten und linken Werkzeugschneide erreicht.

Fig. 6 eine Vorderansicht auf das Verzahnungswerkzeug nach Fig.5,

Fig. 7 eine Seitenansicht auf eine Anordnung nach Fig. 5 und 6,

Fig. 8    eine schaubildliche Anordnung eines Verzahnungswerkzeuges in der Anordnung zu einem zu fräsenden Zahnrad, bei dem das zu fräsende Zahnprofil durch zwei oder mehrere auf dem Werkzeughalter angeordnete Formschnittplatten erzeugt wird. Diese Schnittaufteilung vermindert den Schnittdruck. Gezeigt wird eine der beiden dort verwendeten Formschnittplatten mit einer Anordnung des Plattensitzes für einen positiven Spanwinkel der Werkzeugschneide.

Fig. 9    eine Ansicht einer Anordnung nach Fig. 8 bei der die andere der beiden vorgesehenen Formschnittplatten gezeigt wird,

Fig. 10    eine Seitenansicht auf die Anordnungen nach Fig. 8 u. 9,

Fig. 11    eine Vorderansicht auf ein Verzahnungswerkzeug mit versetzt angeordneten Formschnittplatten zum Vor- und Fertigschneiden,

Fig. 12    eine Seitenansicht auf die Anordnung nach Fig. 11,

Fig. 13    eine Vorderansicht auf ein Verzahnungswerkzeug mit einer sogenannten Schnittaufteilung, im Bild gezeigt Werkzeugposition beim Fräsen der linken Zahnflanke,

Fig. 14    eine Vorderansicht auf ein Verzahnungswerkzeug nach Fig. 13, im Bild gezeigt Werkzeugposition beim Fräsen der rechten Zahnflanke,

Fig. 15    eine Seitenansicht der Anordnung nach Fig. 13 und 14,

Fig. 16    eine Vorderansicht auf ein Verzahnungswerkzeug für eine Unterschnittbearbeitung, im Bild gezeigt die Bearbeitung eines Schaltrades

Fig. 17      eine Vorderansicht auf ein mehrgängiges Verzahnungswerkzeug in der Anordnung zu einem zu fräsenden
Zahnrad, bildliche Darstellung 4-gängig,

Fig. 18      eine Seitenansicht auf die Anordnung nach Fig. 17,

Fig. 19      eine perspektivische Ansicht einer Formschnittplatte.

In den Figuren sind gleiche oder einander entsprechende Teile mit gleichen Bezugszeichen versehen.

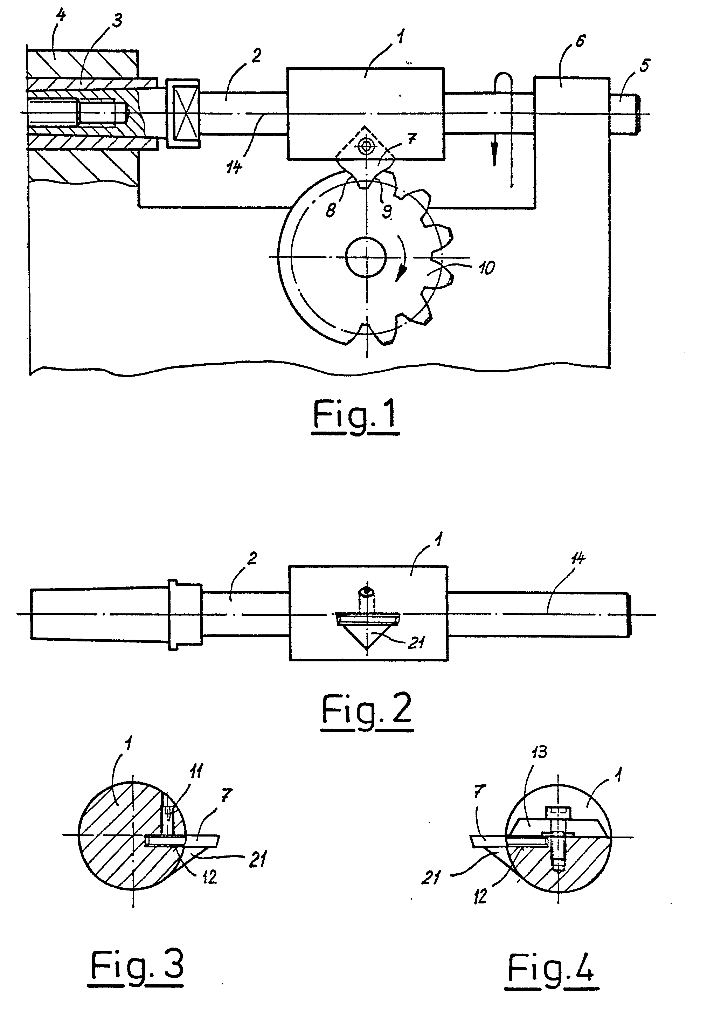

Das, in der Fig. 1 und 2 nur im wesentlichsten dargestellte, Verzahnungswerkzeug besteht im einzelnen aus einem Werkzeughalter 1, der stoffschlüssig oder formschlüssig mit einem Werkzeugschaft 2 verbunden ist, zur unmittelbaren oder mittelbaren Lagerung in einer Werkzeugspindel 3 einer entsprechenden Zahnradfräsmaschine, von der nur der Spindelstock 4 angedeutet wurde. Die Lagerung des Verzahnungswerkzeuges kann grundsätzlich einseitig im Spindelstock 4 erfolgen. Es ist jedoch in der Regel vorgesehen, daß das Verzahnungswerkzeug beidseitig gelagert ist und zwar der Werkzeugschaft 2 in der Werkzeugspindel 3 und der Lagerzapfen 5 in einem sogenannten Gegenlager 6 der Zahnradfräsmaschine.

Auf dem Werkzeughalter 1 ist die Formschnittplatte 7, die insbesondere aus einem Hartmetallwerkstoff hergestellt ist, angeordnet. Die Formschnittplatte 7, deren linke 8 oder rechte 9 Schneide entsprechend dem zu fräsenden Zahnprofil des Werkstückes 10 ausgebildet ist, ist kraftschlüssig nicht lösbar oder kraftschlüssig lösbar auf dem Werkzeughalter 1 angeordnet. Bei einer nicht lösbaren Anordnung ist die Formschnittplatte 7 auf dem Werkzeughalter 1 insbesondere aufgelötet. Bei einer lösbaren Anordnung ist die Formschnittplatte 7 mittels einer Klemmschraube 11 auf einem besonderen Plattensitz 12 auf dem Werkzeughalter 1 festgeklemmt, wie dies die Fig. 3 im Querschnitt deutlich zeigt.

Anstelle dieser relativ einfachen Befestigungsart einer Formschnittplatte 7 auf dem Werkzeughalter 1 kann auch eine Befestigung mittels Klemmbacken 13 erfolgen, wie dies die Fig. 4 prinzipiell zeigt. Sowohl in einer Anordnung nach Fig. 3 als auch nach Fig. 4 kann im Bereich des Plattensitzes 12 als Stütze für die Formschnittplatte 7 am Werkzeughalter 1 eine sogenannte Abstützung 21 insbesondere stoffschlüssig angeordnet sein, zur Aufnahme eines Teiles der Fräskräfte, die auf die Schneiden der Formschnittplatte 7 während des Fräsens einwirken.

Darüberhinaus ist daran gedacht, daß eine Formschnittplatte 7 auch mittelbar, auf einem nicht näher gezeigten einstellbaren und schwenkbaren Plattensitz angeordnet ist, der wiederum auf dem Werkzeuhalter 1 gelagert ist. Eine derartige Ausführung kann erforderlichenfalls in allen drei Ebenen in seiner räumlichen Lage zur Achse des Werkzeughalters 1 oder des Werkzeugschaftes 2 verändert und eingestellt werden.

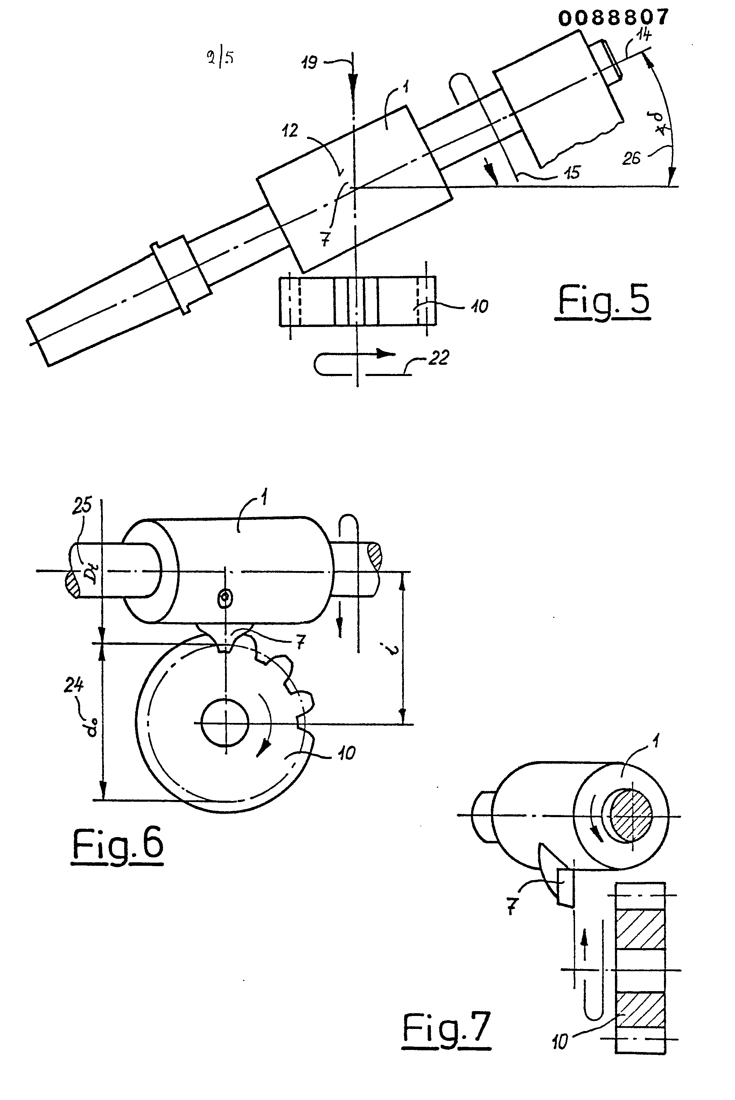

Wie die Fig. 5, 6 und 7 zeigen, ist dort der Werkzeughalter 1 mit der Formschnittplatte 7 in Pfeilrichtung 15 umlaufend. Außerdem ist auch das zu fräsende Werkstück, das Zahnrad 10, in Pfeilrichtung 22 umlaufend. Die Drehzahl des Zahnrades ergibt sich dort aus der Übersetzung von vorgesehener Zähnezahl des Zahnrades 10 zu Gangzahl des Verzahnungswerkzeuges. Bei beispielsweise 12 Zähnen des Zahnrades 10 wäre demnach die Drehzahl des Zahnrades 10 1/12 der Drehzahl des Verzahnungswerkzeuges.

Im weitesten Sinne liegt hier somit erfingungsgemäß ein sogenanntes Wälzfräsen im Formschnittverfahren vor, bei welchem eine oder mehrere Formschnittplatten 7 im Werkzeughalter 1 zur Werkzeugachse 14, geschwenkt um den jeweils werkstück- und werkzeugabhängigen Steigungswinkel $\delta$ 26, so angeordnet sind, daß dort die Span- und Freiwinkel der Formschnittplatten 7 symetrisch zur Vorschubachse 19 des Werkzeuges, auf dem Werkzeughalter 1 liegen.

Die Fig. 5 zeigt die räumliche Lage des Plattensitzes 12 für die Formschnittplatte 7 auf dem Werkzeughalter 1 aus einer anderen Perspektive. Die Lage des Plattensitzes 12 ist bestimmt durch den sich ergebenden Steigungswinkel sin $\delta$ 26, der gebildet ist aus $\sin \delta = \dfrac{do}{Dt.z}$ . 19 bezeichnet wiederum die Vorschubachse des Werkzeuges und 14 die Achse des Werkzeuges. Es ist dort sichtbar, daß Span- und Freiwinkel der Formschnittplatte 7 symetrisch zur Vorschubachse 19 liegen.

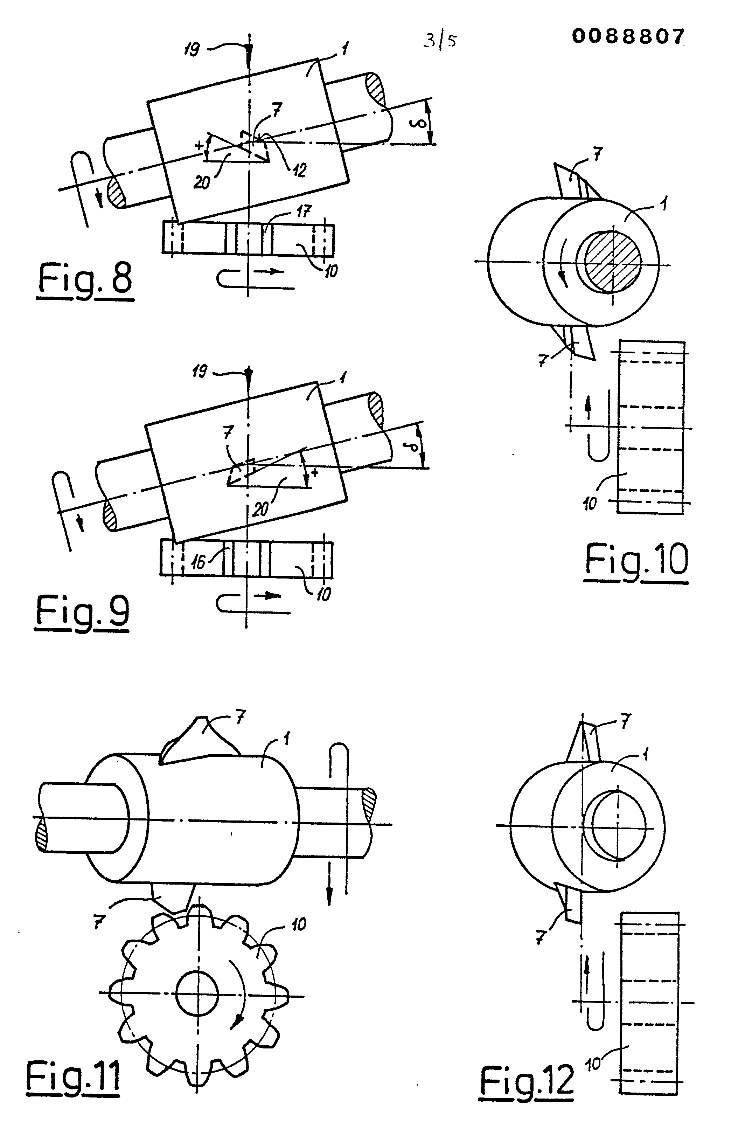

In der Fig. 8 und 9 ist ein Verzahnungswerkzeug dargestellt, bei dem der Schnitt des zu fräsenden Zahnprofils erfindungsgemäß in mehrere Schnitte aufgeteilt ist. Die Fig. 8 zeigt die räumliche Lage der einen Formschnittplatte 7 auf dem Werkzeughalter 1, die zum Fräsen der einen Zahnflanke 17 des Zahnrades 10 vorgesehen ist. Der Plattensitz 12 der Formschnittplatte 7 zeigt dort einen, zur Vorschubachse 19 des Werkzeuges symetrischen Span- und Freiwinkel, wobei in diesem Falle der Spanwinkel positiv 20 ist. Die Fig. 9 zeigt die räumliche Lage der zweiten Formschnittplatte 7 auf dem Werkzeughalter 1, die zum Fräsen der anderen Zahnflanke 16 des Zahnrades 10 oder eines entsprechenden anderen Werkstückes vorgesehen ist. Die Span- und Freiwinkel entsprechen denen in der Fig. 8. Der positive Spanwinkel ist mit der Ziffer 20 bezeichnet.

In der Fig. 10 ist die räumlich einander entgegengesetzte Lage der beiden Formschnittplatten 7 auf dem Werkzeughalter 1 sichtbar. 10 bezeichnet dort das zu fräsende Zahnrad oder Werkstück.

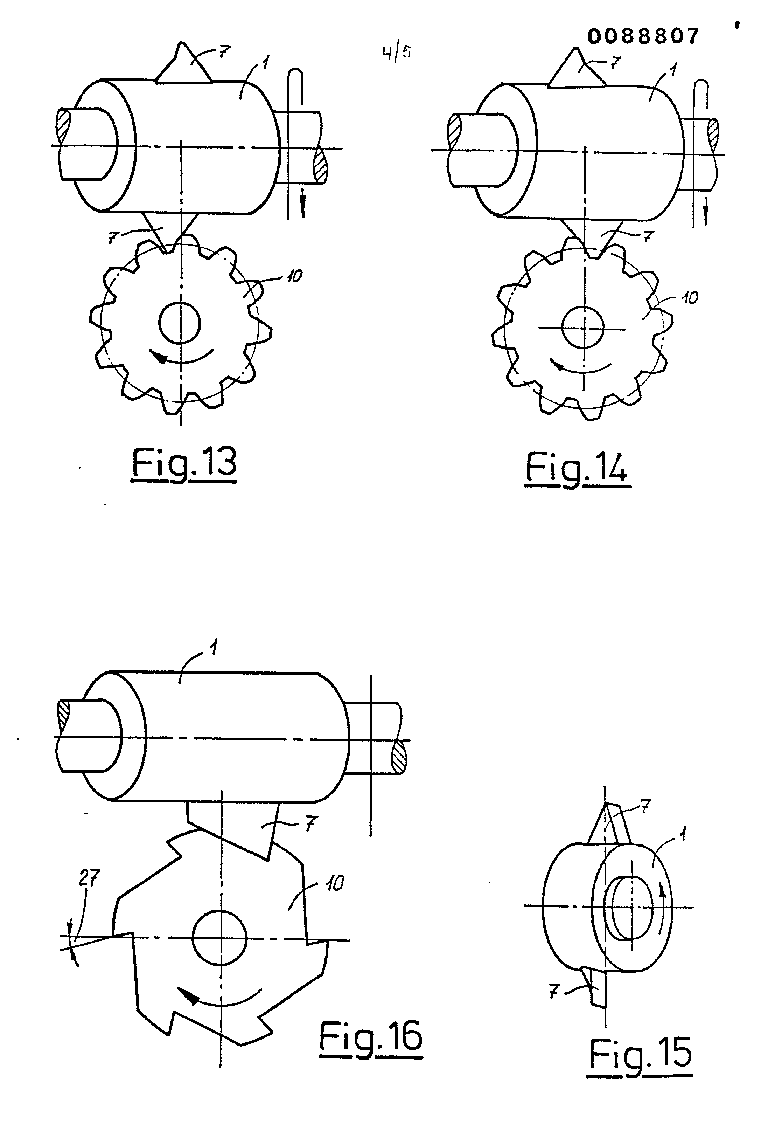

In einer Ausführung eines Verzahnungswerkzeuges, wie es die Fig. 11 zeigt, ist der Werkzeughalter 1, in Weiterbildung der Erfingung, mit zwei, im Profil zueinander abweichenden, Formschnittplatten 7 bestückt. Die eine Formschnittplatte 7 ist dort zum Vorschneiden oder Vorfräsen vorgesehen und die andere Formschnittplatte 7 mit dem Vollprofil ist für das Fertigschneiden oder Fertigfräsen vorgesehen. Beide Formschnittplatten 7 sind in diesem Falle einander gegenüberliegend auf dem Werkzeughalter 1 angeordnet, wie dies die Fig. 12 zeigt. Je nach Konstruktion des Werkzeuges können eine oder mehrere Formschnittplatten Verwendung finden, die nicht genau einander gegenüberliegend angeordnet sein müssen.

Die Fig. 13, 14 und 15 zeigen desweiteren ein Verzahnungswerkzeug mit einer erfindungsgemäßen Aufteilung eines zu fräsenden Profils in zwei oder mehrere Schnitte, wie dies bereits in den Fig. 8, 9 und 10 beschrieben wurde. 1 bezeichnet dort einen Werkzeughalter mit den darauf angeordneten Formschnittplatten 7. Fig. 13 zeigt die Fräsposition der Formschnittplatte 7 beim Fräsen der linken Zahnflanke des Werkstückes 10, Fig. 14 zeigt die Fräspositon der anderen Formschnittplatte 7 beim Fräsen der rechten Zahnflanke des Werkstückes 10. Fig. 13 zeigt das eine zu fräsende Profil an der einen vorgesehenen Formschnittplatte 7 und Fig. 14 zeigt das andere zu fräsende Profil an der zweiten Formschnittplatte 7. 10 bedeutet wiederum das zu fräsende Zahnrad oder Werkstück. Die Fig. 15 zeigt für diesen Fall wiederum die räumliche Anordnung der beiden Formschnittplatten 7 zueinander auf dem Werkzeughalter 1.

Es liegt im Rahmen der Erfindung, daß mit dem vorliegenden Verzahnungswerkzeug auch eine sogenannte Unterschnittbearbeitung eines Werkstückes oder eines Zahnrades 10 möglich ist, wie dies die Fig. 16 zeigt. 1 bedeutet einen Werkzeughalter mit einer dort angeordneten, entsprechenden Formschnittplatte 7 mit dem Gegenprofil des unterschnitten 27 zu bearbeitenden Werkstückes oder Zahnrades 10.

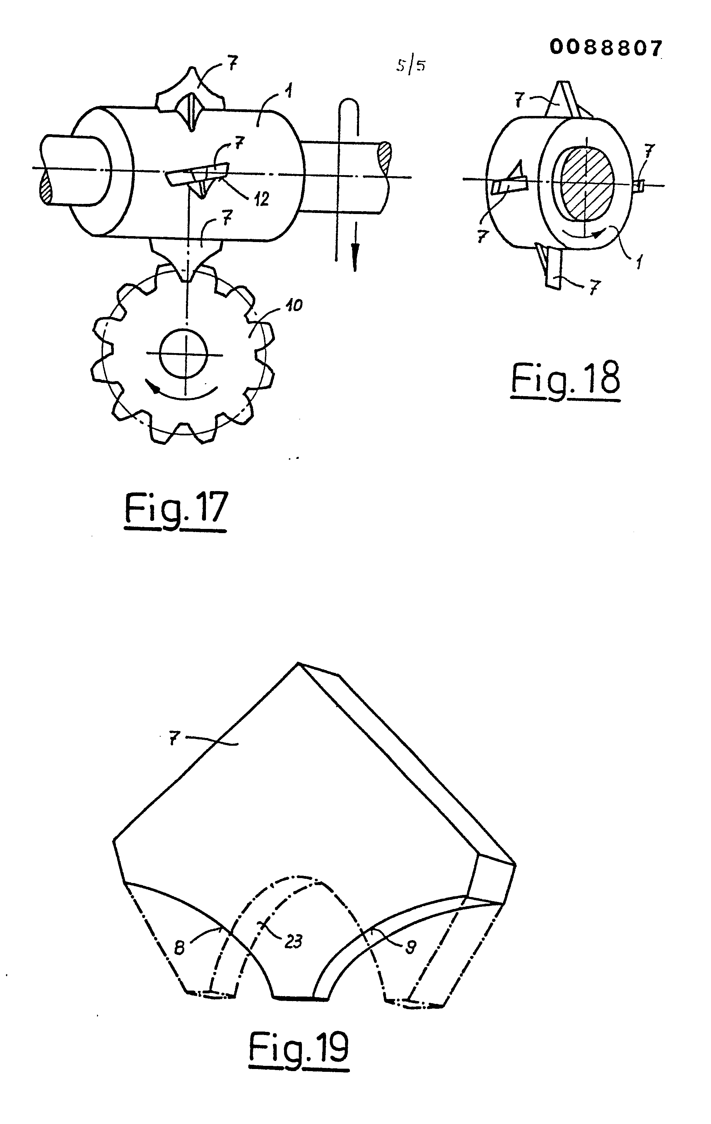

Eine, in Weiterbildung der Erfindung vorgesehene, mehrgängige Ausführung eines Verzahnungswerkzeuges zeigen die Figuren 17 und 18. Auf einem Werkzeughalter 1 sind der Gangzahl des Werkzeuges entsprechend zu diesem Zweck entsprechend viele Plattensitze 12 für die Anordnung und Befestigung entsprechender Formschnittplatten 7 vorgesehen, die, wie die Fig. 18 näher zeigt, um den Umfang des Werkzeughalters 1 herum

**0088807**

verteilt angeordnet sind. 10 bezeichnet das zu fräsende Zahnrad oder ein sonstiges Werkstück. Das Verzahnungswerkzeug ist in diesem Falle 4-gängig.

Die Fig. 19 zeigt eine der möglichen Ausführungsformen einer Formschnittplatte 7, die in der Regel aus einem Hartmetallwerkstoff hergestellt ist und insbesondere als sogenannte Einwegplatte für die einmalige Verwendung auf einem Werkzeughalter 1 ausgebildet ist. Es ist vorgesehen, daß eine derartige Formschnittplatte 7 erforderlichenfalls aus mehreren, entsprechend profilierten Einzelplatten zusammengesetzt ist. Insbesondere ist daran gedacht, daß mehrere Formschnittplatten 7 in einer Ebene nebeneinander liegend auf einem Werkzeughalter 1 angeordnet sind, wenn dies bei der Bearbeitung eines entsprechenden Werkstückes von Vorteil sein sollte. Anstelle der bisher gezeigten sogenannten Außenhüllkurven der Profile 8 und 9 an den Formschnittplatten 7 ist es auch möglich, wie ein Ausführungsbeispiel im Rahmen der Fig. 19 zeigt, daß auch entsprechende Innenhüllkurven 23 vorgesehen sind.

Patentansprüche

1. Verzahnungswerkzeug mit einem Werkzeughalter (1) und einem oder mehreren darauf angeordneten Fräswerkzeugen , zum Fräsen von Zahnrädern (10) oder anderen Werkstücken, dadurch gekennzeichnet, daß die Fräswerkzeuge als Formschnittplatten (7) ausgebildet sind, die insbesondere lösbar kraftschlüssig auf dem Werkzeughalter (1) angeordnet sind.

2. Verzahnungswerkzeug nach Anspruch 1, dadurch gekennzeichnet, daß die Plattensitze (12) für die Formschnittplatten (7) entsprechend dem sich aus do (24), dt (25) und der Werkstückzähnezahl ergebenden Steigungswinkel $\delta$ (26) geschwenkt angeordnet sind, so daß die Span- und Freiwinkel der Formschnittplatte (7) symetrisch zur Vorschubachse (19) des Fräswerkzeuges liegen.

3. Verzahnungswerkzeug nach Anspruch 1 und 2, dadurch gekennzeichnet, daß mehr als nur eine einzige Formschnittplatte (7) auf einem Werkzeughalter (1) angeordnet sind.

4. Verzahnungswerkzeug nach Anspruch 1 bis 3, dadurch gekennzeichnet, daß entsprechend ausgebildete Formschnittplatten (7) zum Vor- und Fertigfräsen eines Zahnprofiles (8 und 9) eines Zahnrades (10) oder anderen Werkstücken auf einem Werkzeughalter (1) angeordnet sind.

5. Verzahnungswerkzeug nach Anspruch 1 bis 3, dadurch gekennzeichnet, daß mehrere entsprechend ausgebildete Formschnittplatten (7) zum Fräsen eines Zahnprofiles (8und9), das zum Fräsen in mehrere Schnitte aufgeteilt ist, auf einer Werkzeughalter (1) angeordnet sind.

6. Verzahnungswerkzeug nach Anspruch 1 bis 5, dadurch gekennzeichnet, daß durch entsprechende Anordnung der Plattensitze (12) die Formschnittplatten (7) mit positivem (20) oder negativem Spanwinkel arbeiten.

7. Verzahnungswerkzeug nach Anspruch 1 bis 6, dadurch gekennzeichnet, daß bei einer mehrgängigen Ausführung des Werkzeuges die Formschnittplatten (7) gleichmäßig um den Umfang des Werkzeughalters (1) herum angeordnet sind.

8. Verzahnungswerkzeug nach Anspruch 1 bis 7, dadurch gekennzeichnet, daß die Formschnittplatten (7) mittels einer Schraubenklemmung auf dem Werkzeughalter (1) befestigt sind.

9. Verzahnungswerkzeug nach Anspruch 1 bis 7, dadurch gekennzeichnet, daß die Formschnittplatten (7) mittels einer Klemmbacken- (13) Befestigung auf einem Werkzeughalter (1) kraftschlüssig befestigt sind.

10. Verzahnungswerkzeug nach Anspruch 1 bis 9, dadurch gekennzeichnet, daß der Plattensitz (12) auf einem Werkzeughalter (1) einstellbar, insbesondere in allen drei Ebenen in seiner räumlichen Lage zur Achse (14) des Werkzeughalters (1) oder des Werkzeugschaftes (2) veränderbar ist.

11. Verzahnungswerkzeug nach Anspruch 1 bis 10, dadurch gekennzeichnet, daß die Formschnittplatten (7) insbesondere aus einem Hartmetallwerkstoff und insbesondere als Einwegplatten hergestellt sind und daß die Formschnittplatten (7) sowohl die Außenhüllkurven oder auch die Innenhüllkurven (23) der zu fräsenden Zahnprofile (8 und 9) und jede Formschnittplatte (7) für sich eine oder mehrere gleiche Profilschneiden aufweist.

0088807

1/5

Fig.1

Fig.2

Fig.3

Fig.4

Fig. 5

Fig.6

Fig.7

Fig. 8

Fig. 9

Fig. 10

Fig. 11

Fig. 12

Fig.13

Fig.14

Fig.16

Fig.15

0088807

Fig. 17

Fig. 18

Fig. 19

| | Europäisches Patentamt | **EUROPÄISCHER RECHERCHENBERICHT** | **0088807** Nummer der Anmeldung |

EP  82 10 1763

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | B 23 F  1/06 |
| X | DE-B-1 203 576  (BURGSMÜLLER) * Spalte 3, Zeilen 3-55; Figuren * | 1,2,10 | B 23 C  3/30 |
| X | --- FR-A-2 369 896  (WERNER) * Seite 3, Zeilen 7-39; Figur 4 * | 1,2 | |
| X | --- DE-C-  243 514  (ADAMS) * Seite 2, Zeilen 18-60; Figuren * | 1-3 | |
| X | --- FR-A-  979 481  (FREREJACQUES) * Seite 2, linke Spalte, Zeile 53 - rechte Spalte, Zeile 51; Figuren * | 1-3 | |
| X | --- US-A-1 626 821  (HEAD) * Seite 2, Zeilen 4-114; Figuren * | 1-3 | RECHERCHIERTE SACHGEBIETE (Int. Cl. ³) |
| A | --- FR-A-  415 932  (HUMPHRIS) | 1 | B 23 F  1/00 B 23 F  5/00 B 23 C  3/00 |
| A | --- FR-A-  885 894  (JUNKERS) | 1 | |
| A | --- CH-A-  392 210  (BÄNNINGER) | 1 | |
| A | --- US-A-3 059 546  (JOHNSON) | 1 | |
| | ----- | | |

Der vorliegende Recherchenbericht wurde für alle Patentansprüche erstellt

| Recherchenort DEN HAAG | Abschlußdatum der Recherche 06-12-1982 | Prüfer HORVATH R.C. |